# EUROPÄISCHE PATENTSCHRIFT

(11) **EP 3 363 089 B1**
(45) Veröffentlichungstag und Bekanntmachung des Hinweises auf die Patenterteilung: **17.07.2019**
(21) Anmeldenummer: 16777925.5
(22) Anmeldetag: 19.09.2016
(51) Int. Cl.: H02J 3/18

(54) **BLINDLEISTUNGSKOMPENSATIONSEINRICHTUNG SOWIE VERFAHREN ZUM BETREIBEN EINER BLINDLEISTUNGSKOMPENSATIONSEINRICHTUNG**
POWER FACTOR CORRECTION DEVICE AND METHOD FOR OPERATING A POWER FACTOR CORRECTION DEVICE
SYSTÈME DE COMPENSATION DE PUISSANCE RÉACTIVE AINSI QUE PROCÉDÉ DE FONCTIONNEMENT D'UN SYSTÈME DE COMPENSATION DE PUISSANCE RÉACTIVE

(30) Priorität: 16.10.2015 DE 102015220220
(43) Veröffentlichungstag der Anmeldung: 22.08.2018
(73) Patentinhaber: Siemens Aktiengesellschaft, 80333 München (DE)
(72) Erfinder: HÖRGER, Wolfgang, 91353 Hausen (DE); PIESCHEL, Martin, 90473 Nürnberg (DE); PINKWART, Jonas, 90768 Fürth (DE)
(86) Internationale Anmeldenummer: PCT/EP2016/072150
(87) Internationale Veröffentlichungsnummer: WO 2017/063819

(56) Entgegenhaltungen:
- EP-A1- 2 416 486
- US-B2- 8 207 712

## Beschreibung

Blindleistungskompensationseinrichtung sowie Verfahren zum Betreiben einer Blindleistungskompensationseinrichtung Die Erfindung bezieht sich auf eine Blindleistungskompensationseinrichtung für ein Wechselspannungsnetz sowie auf ein Verfahren zu deren Betrieb.

Eine Blindleistungskompensationseinrichtung ist beispielsweise aus der US-Patentschrift US 8,207,712 B2 bekannt. Die vorbekannte Blindleistungskompensationseinrichtung ist mit einem Transformator ausgestattet, der sekundärseitig in einer Sternpunktschaltung verschaltet ist und pro Phase einen sekundärseitigen Anschluss aufweist. Zwischen jeden der sekundärseitigen Anschlüsse des Transformators und dem Sternpunkt der Sternschaltung ist jeweils eine Modulreihenschaltung mit mindestens zwei in Reihe geschalteten Schaltmodulen, die jeweils mindestens vier Schalter und einen Kondensator aufweisen, geschaltet. Bei dem Transformator handelt es sich um einen Herunter-Setz(step down)-Transformator. Alternativ wurde die Sternpunkterzeugung mittels eines Transformators des sogenannten "Zick-Zack"-Typs beschrieben.

Aus der EP 2 416 486 A1 ist eine Einrichtung nach dem Oberbegriff des Patentanspruchs 1 bekannt.

Eine weitere Einrichtung zum Austausch elektrischer Leistung mit einem Wechselspannungsnetz ist in der US 8 207 712 B2 offenbart.

Der Erfindung liegt die Aufgabe zugrunde, eine verbesserte Blindleistungskompensationseinrichtung anzugeben.

Diese Aufgabe wird erfindungsgemäß durch eine Blindleistungskompensationseinrichtung mit den Merkmalen gemäß Patentanspruch 1 gelöst. Vorteilhafte Ausgestaltungen der erfindungsgemäßen Blindleistungskompensationseinrichtung sind in Unteransprüchen angegeben.

Danach ist erfindungsgemäß vorgesehen, dass der Transformator der Blindleistungskompensationseinrichtung ein Streufeldtransformator ist.

Ein wesentlicher Vorteil der erfindungsgemäßen Blindleistungskompensationseinrichtung ist darin zu sehen, dass auf der Sekundärseite des Streufeldtransformators keine weiteren Induktivitäten vorhanden sein müssen, um einen zufriedenstellenden Betrieb der sekundärseitig vorgesehenen Modulreihenschaltungen zu ermöglichen. Dies ist darauf zurückzuführen, dass Streufeldtransformatoren bauartbedingt aufgrund der sekundärseitig auftretenden Streufelder sekundärseitig stets eine sehr große Induktivität aufweisen. Mit anderen Worten besteht der erfindungsgemäße Gedanke also darin, Streufeldinduktivitäten, die Streufeldtransformatoren bauartbedingt aufweisen, für den sekundärseitigen Betrieb von Modulreihenschaltungen, insbesondere von Multilevelumrichtermodulen, die durch diese Modulreihenschaltungen gebildet werden, zu ermöglichen.

Ein weiterer wesentlicher Vorteil der erfindungsgemäßen Blindleistungskompensationseinrichtung ist darin zu sehen, dass diese aufgrund des Wegfalls zusätzlicher Induktivitäten auf der Sekundärseite des Transformators besonders kompakt realisierbar sind. Bei heutzutage üblichen Blindleistungskompensationseinrichtungen werden sekundärseitig Luftspulen eingesetzt, die aufgrund ihrer Größe und der durch sie erzeugten Magnetfelder im Freien, also außerhalb der Gebäude, in denen die übrigen Komponenten der Blindleistungskompensationseinrichtung angeordnet sind, installiert werden müssen. Da also aufgrund des erfindungsgemäß vorgesehenen Einsatzes eines Streufeldtransformators sekundärseitig keine weiteren Induktivitäten, insbesondere keine Luftspulen, erforderlich sind, können alle Komponenten der Blindleistungskompensationseinrichtung in einem geschlossenen Raum bzw. einem geschlossenen Gebäude untergebracht werden; es ist nicht nötig, einzelne Komponenten der Blindleistungskompensationseinrichtung im Freien anzuordnen.

Mit Blick auf die Ausgestaltung des Streufeldtransformators wird es als besonders vorteilhaft angesehen, wenn die Streuung der Streufelder so groß bemessen ist, dass die auf die Nennspannung bezogene Kurzschlussspannung des Streufeldtransformators bei kurzgeschlossener Sekundärwicklung mindestens 20 % beträgt.

Bezüglich des elektrischen Anschlusses der sekundärseitigen Streuinduktivitäten wird es als vorteilhaft angesehen, wenn die durch die Streufelder des Streufeldtransformators bedingten und an den sekundärseitigen Anschlüssen wirkenden sekundärseitigen Streuinduktivitäten jeweils mit der an dem jeweiligen sekundärseitigen Anschluss des Streufeldtransformators angeschlossenen Modulreihenschaltung in Reihe liegen.

Wie bereits erwähnt, ist es mit Blick auf einen kompakten Aufbau der Blindleistungskompensationseinrichtung bzw. mit Blick darauf, dass alle Komponenten der Blindleistungskompensationseinrichtung in einem geschlossenen Gebäude, also nicht im Freien, untergebracht werden können, vorteilhaft, wenn die Modulreihenschaltungen jeweils drosselfrei, zumindest aber luftdrosselfrei, sind.

Im Falle eines dreiphasigen Wechselspannungsnetzes wird es als vorteilhaft angesehen, wenn der Streufeldtransformator sekundärseitig eine den Sternpunkt bildende Sternwicklung und primärseitig eine Dreieckswicklung aufweist, die die primärseitigen Transformatoranschlüsse des Streufeldtransformators bilden.

Um ein Einschalten der Blindleistungskompensationseinrichtung mit minimaler negativer Rückwirkung auf das Wechselspannungsnetz zu ermöglichen, wird es als vorteilhaft angesehen, wenn die Blindleistungskompensationseinrichtung eine Schalteinrichtung aufweist, die zwischen die äußeren Netzanschlüsse der Blindleistungskompensationseinrichtung und die primärseitigen Transformatoranschlüsse des Streufeldtransformators geschaltet ist.

Vorzugsweise weist die Schalteinrichtung einen ohmschen Widerstand und einen dazu parallel geschalteten Schalter auf.

Besonders vorteilhaft ist es, wenn die Schalteinrichtung eine Reihenschaltung aufweist, die einen ersten Schalter und eine mit dem ersten Schalter in Reihe geschaltete Parallelschaltung aus einem ohmschen Widerstand und einem zu dem Widerstand parallel geschalteten zweiten Schalter umfasst.

Mit Blick auf die Ansteuerung dieser Schalteinrichtung wird es als vorteilhaft angesehen, wenn die Blindleistungskompensationseinrichtung eine Steuereinrichtung aufweist, die derart ausgestaltet ist, dass sie bei abgeschalteter Blindleistungskompensationseinrichtung den ersten und den zweiten Schalter in der jeweils geöffneten Schalterstellung belässt, in einem ersten Ablaufschritt bei der Inbetriebnahme der Blindleistungskompensationseinrichtung zunächst den ersten Schalter schließt und dabei den zweiten Schalter geöffnet lässt und in einem nachfolgenden zweiten Ablaufschritt bei der Inbetriebnahme der Blindleistungskompensationseinrichtung zusätzlich den zweiten Schalter schließt.

Alternativ oder zusätzlich können in vorteilhafter Weise auch Schalteinrichtungen zwischen die sekundärseitigen Transformatoranschlüsse des Streufeldtransformators und die mit diesen in Verbindung stehenden Modulreihenschaltungen geschaltet sein: Solche Schalteinrichtungen können jeweils einen ersten Schalter und eine mit dem ersten Schalter in Reihe geschaltete Parallelschaltung aus einem ohmschen Widerstand und einem zu dem Widerstand parallel geschalteten zweiten Schalter umfassen; die Ansteuerung der zwei Schalter solcher Schalteinrichtungen erfolgt vorzugsweise genauso, wie oben bereits im Zusammenhang mit einer primärseitig angeschlossenen Schalteinrichtung erläutert wurde.

Alternativ können sekundärseitig auch lediglich Schalteinrichtungen eingesetzt werden, die durch einen ohmschen Widerstand und einen dazu parallel geschalteten Schalter gebildet sind.

Um Ausgleichsströme auf der Sekundärseite der Blindleistungskompensationseinrichtung ohne Rückwirkung auf die Primärseite bzw. ohne Rückwirkung auf das Wechselspannungsnetz, bzw. mit nur minimaler Rückwirkung, zu ermöglichen, weisen die Modulreihenschaltungen zusätzlich zu den Schaltmodulen jeweils einen mit den Schaltmodulen in Reihe geschalteten Serienschwingkreis auf, dessen Resonanzfrequenz das Dreifache der Netzfrequenz oder ein ganzzahliges Vielfaches dieses Dreifachen beträgt.

Bezüglich der Serienschwingkreise wird es als vorteilhaft angesehen, wenn diese oder zumindest einer der Serienschwingkreise eine Induktivität, insbesondere eine Induktivität mit Eisenkern, und einen damit in Reihe geschalteten Kondensator umfasst oder durch diese Komponenten gebildet ist.

Mit anderen Worten ist es also vorteilhaft, wenn die Modulreihenschaltungen zusätzlich zu den Schaltmodulen jeweils eine mit den Schaltmodulen in Reihe geschaltete Impedanz, insbesondere eine Induktivität mit Eisenkern, und/oder einen Kondensator aufweisen.

Darüber hinaus wird es als vorteilhaft angesehen, wenn - zusätzlich oder alternativ - zwischen den sekundärseitigen Sternpunkt des Streufeldtransformators und die elektrische Verbindungsstelle der Modulreihenschaltungen eine Impedanz, insbesondere eine Induktivität mit Eisenkern, und/oder ein Kondensator geschaltet ist.

Erfindungsgemäß ist zwischen den sekundärseitigen Sternpunkt des Streufeldtransformators und die elektrische Verbindungsstelle der Modulreihenschaltungen eine Reihenschaltung aus einer Induktivität und einem Kondensator geschaltet. Die Induktivität und der Kondensator bilden einen Serienschwingkreis. Die Resonanzfrequenz des Serienschwingkreises beträgt vorzugsweise das Dreifache der Netzfrequenz oder ein ganzzahliges Vielfaches dieses Dreifachen.

Mit Blick auf einen besonders kompakten Aufbau der Blindleistungskompensationseinrichtung bzw. mit Blick darauf, dass möglichst keine Komponenten im Freien bzw. in der Umgebung angeordnet werden müssen, wird es als vorteilhaft angesehen, wenn der Streufeldtransformator und die Modulreihenschaltungen, insbesondere alle elektrischen Komponenten der Blindleistungskompensationseinrichtung, räumlich in einem nach außen hin abgeschlossenen Raum, insbesondere in demselben Gebäude oder in demselben Gehäuse, untergebracht sind.

Die Schaltmodule sind vorzugsweise H-Brückenmodule, die jeweils vier Halbleiterschalter, zu denen jeweils eine Diode parallel geschaltet ist, und einen Kondensator aufweisen.

Die Erfindung bezieht sich darüber hinaus auf ein Verfahren gemäß Anspruch 14 auf.

Bezüglich eines solchen Verfahrens wird erfindungsgemäß vorgeschlagen, dass als Transformator ein Streufeldtransformator verwendet wird und der Strom durch die Modulreihenschaltungen im zeitlichen Verlauf durch die sekundärseitigen Streuinduktivitäten des Streufeldtransformators geglättet und bei einem sekundärseitigen Kurzschluss begrenzt wird.

Bezüglich der Vorteile des erfindungsgemäßen Verfahrens sei auf die obigen Ausführungen im Zusammenhang mit der erfindungsgemäßen Blindleistungskompensationseinrichtung verwiesen.

Die Erfindung wird nachfolgend anhand von Ausführungsbeispielen näher erläutert; dabei zeigen beispielhaft
- Figur 1: ein Ausführungsbeispiel für eine erfindungsgemäße Blindleistungskompensationseinrichtung, die zur Kompensation von Blindleistung in einem dreiphasigen Wechselspannungsnetz eingesetzt werden kann,
- Figur 2: Ausführungsbeispiele für einen Streufeldtransformator und ein Multilevelumrichtermodul für die Blindleistungskompensationseinrichtung gemäß Figur 1 näher im Detail,
- Figur 3: ein Ausführungsbeispiel für eine Modulreihenschaltung, die bei der Blindleistungskompensationseinrichtung gemäß Figur 1 bzw. bei dem Multilevelumrichtermodul gemäß Figur 2 eingesetzt werden kann,
- Figur 4: ein Ausführungsbeispiel für ein Schaltmodul, das zur Bildung der Modulreihenschaltung gemäß Figur 3 eingesetzt werden kann,
- Figur 5: ein Ausführungsbeispiel für eine Schalteinrichtung, die bei der Blindleistungskompensationseinrichtung gemäß Figur 1 eingesetzt werden kann,
- Figur 6: ein weiteres Ausführungsbeispiel für eine Modulreihenschaltung, die bei der Blindleistungskompensationseinrichtung gemäß Figur 1 bzw. dem Multilevelumrichtermodul gemäß Figur 2 eingesetzt werden kann,
- Figur 7: ein drittes Ausführungsbeispiel für eine Modulreihenschaltung, die bei der Blindleistungskompensationseinrichtung gemäß Figur 1 bzw. dem Multilevelumrichtermodul gemäß Figur 2 eingesetzt werden kann,
- Figur 8: ein Ausführungsbeispiel für eine Anordnung mit einem Streufeldtransformator, einem Multilevelumrichtermodul und einem Serienschwingkreis zwischen Multilevelumrichtermodul und Sternpunkt für die Blindleistungskompensationseinrichtung gemäß Figur 1, und
- Figur 9: ein Ausführungsbeispiel für eine Anordnung mit einem Streufeldtransformator und einem Multilevelumrichtermodul für die Blindleistungskompensationseinrichtung gemäß Figur 1, wobei zwischen Schaltmodulen des Multilevelumrichtermoduls und den jeweils zugeordneten sekundärseitigen Transformatoranschlüssen des Streufeldtransformators jeweils eine Schalteinrichtung geschaltet ist.

In den Figuren werden der Übersicht halber für identische oder vergleichbare Komponenten stets dieselben Bezugszeichen verwendet.

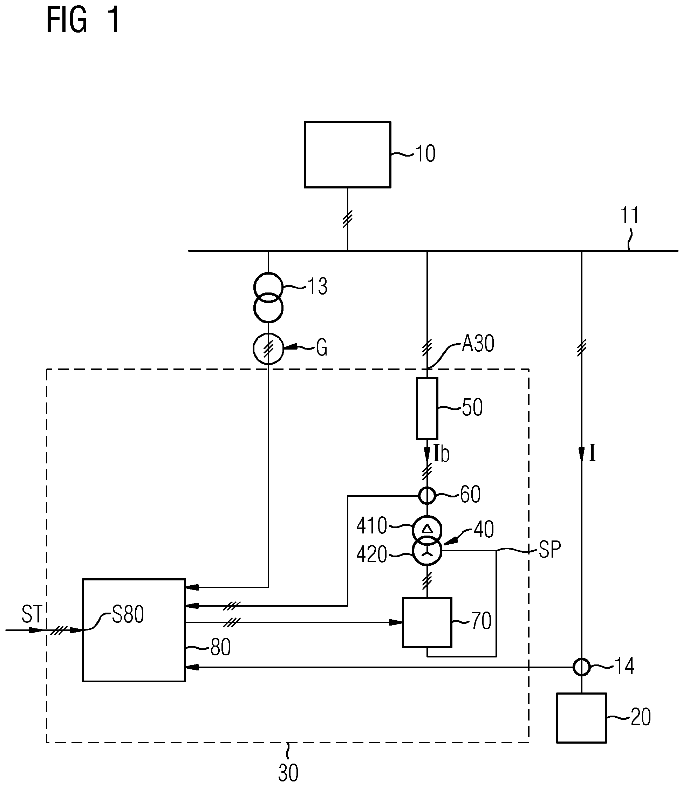

Die Figur 1 zeigt ein dreiphasiges Wechselspannungsnetz 10, an das über eine Anschlussschiene 11 eine elektrische Last 20 angeschlossen ist. Zur Kompensation von Blindleistung, die die elektrische Last 20 aus dem Wechselspannungsnetz 10 entnimmt bzw. in dieses einspeist, ist eine Blindleistungskompensationseinrichtung 30 vorgesehen, die ebenfalls an die Anschlussschiene 11 angeschlossen ist und zu der Last 20 elektrisch parallel liegt.

Die Blindleistungskompensationseinrichtung 30 weist bei dem Ausführungsbeispiel gemäß Figur 1 einen Streufeldtransformator 40 auf, der primärseitig eine Dreieckswicklung 410 und sekundärseitig eine Sternwicklung 420 umfasst.

Die Dreieckswicklung 410 bildet drei primärseitige Transformatoranschlüsse des Streufeldtransformators 40, die über eine Schalteinrichtung 50 an die äußeren Netzanschlüsse A30 der Blindleistungskompensationseinrichtung 30 angeschlossen sind. Da das Wechselspannungsnetz 10 bei dem Ausführungsbeispiel gemäß Figur 1 ein dreiphasiges Wechselspannungsnetz ist, ist die Blindleistungskompensationseinrichtung 30 mit drei äußeren Netzanschlüsse A30 ausgestattet, von denen der Übersicht halber in der Figur 1 nur einer stellvertretend für alle drei Netzanschlüsse dargestellt ist. Die Dreiphasigkeit der Verbindungsleitungen zwischen den Komponenten der Anlage gemäß Figur 1 und damit die Dreiphasigkeit der Komponenten selbst ist in der Figur 1 jeweils durch eine Gruppe G an drei parallelen Querstrichen symbolisiert.

Bei dem Ausführungsbeispiel gemäß Figur 1 ist zwischen der Schalteinrichtung 50 und den primärseitigen Transformatoranschlüssen des Streufeldtransformators 40 ein Stromsensor 60 vorgesehen, der den durch die Blindleistungskompensationseinrichtung 30 fließenden dreiphasigen Strom Ib phasenstromindividuell erfasst.

Die Sternwicklung 420 des Streufeldtransformators 40 bildet sekundärseitige Transformatoranschlüsse sowie einen Sternpunkt SP, zwischen denen ein Multilevelumrichtermodul 70 geschaltet ist.

Zur Ansteuerung der Schalteinrichtung 50 sowie zur Ansteuerung des Multilevelumrichtermoduls 70 weist die Blindleistungskompensationseinrichtung 30 eine Steuereinrichtung 80 auf. Die Steuereinrichtung 80 steht mit dem Stromsensor 60 in Verbindung und wertet den durch die Blindleistungskompensationseinrichtung 30 fließenden Strom Ib aus. Darüber hinaus steht die Steuereinrichtung 80 mit einem Spannungssensor 13, der die Netzspannung an der Anschlussschiene 11 bzw. die Netzspannung des Wechselspannungsnetzes 10 misst, als auch mit einem Stromsensor 14, der den durch die elektrische Last 20 fließenden Laststrom I misst, in Verbindung.

Die Steuereinrichtung 80 kann beispielsweise eine Recheneinrichtung, insbesondere eine Mikroprozessoreinrichtung, umfassen, die derart programmiert ist, dass sie die Steuerung der Blindleistungskompensationseinrichtung 30, insbesondere die Steuerung des Multilevelumrichtermoduls 70, anhand der eingangsseitig anliegenden Messwerte vornimmt, und zwar vorzugsweise derart, dass die Blindleistungskompensationseinrichtung 30 die von der Last 20 hervorgerufene Blindleistung kompensiert.

Die Steuereinrichtung 80 weist vorzugsweise außerdem einen Steuereingang S80 auf, an dem ein externes Steuersignal ST zur externen Steuerung der Blindleistungskompensationseinrichtung 30 bzw. deren Multilevelumrichtermoduls 70 eingespeist werden kann.

Vorteilhaft ist es auch, wenn die Steuereinrichtung 80 darüber hinaus mit Strommsensoren in Verbindung steht, die innerhalb des Multilevelumrichtermoduls 70 vorhanden sind und die innerhalb des Multilevelumrichtermoduls 70 fließende Modulströme umfasst. Ausführungsbeispiele für entsprechende Multilevelumrichtermodule 70 werden weiter unten beschrieben.

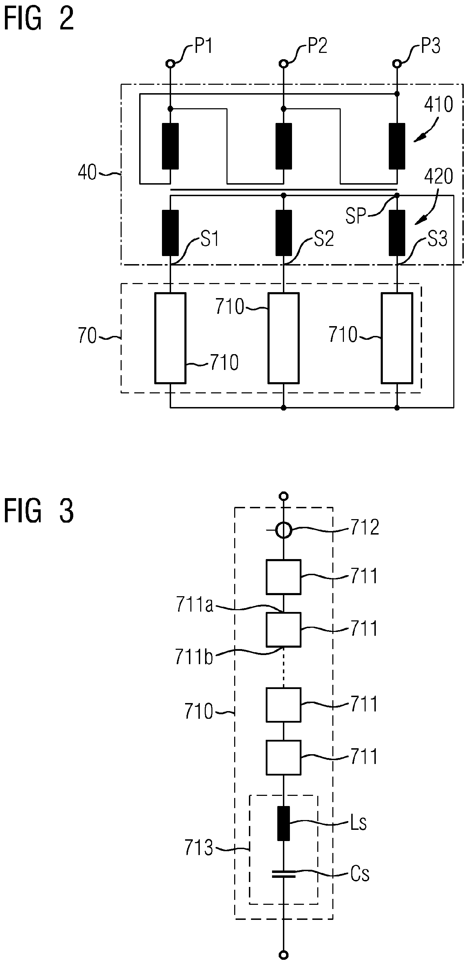

Die Figur 2 zeigt ein Ausführungsbeispiel für einen Streufeldtransformator 40 und ein Multilevelumrichtermodul 70, die zur Bildung der Blindleistungskompensationseinrichtung 30 gemäß Figur 1 herangezogen bzw. verwendet werden können.

Der Streufeldtransformator 40 gemäß Figur 2 weist eine primärseitige Dreieckswicklung 410 auf, die drei primärseitige Transformatoranschlüsse P1, P2 und P3 des Streufeldtransformators 40 bildet. Die drei primärseitigen Transformatoranschlüsse P1, P2 und P3 können an den Stromsensor 60 bzw. an die Schalteinrichtung 50 gemäß Figur 1 angeschlossen werden.

Der Streufeldtransformator 40 umfasst darüber hinaus eine sekundärseitige Sternwicklung 420, die durch eine Sternpunktschaltung von sekundärseitigen Einzelwicklungen des Streufeldtransformators 40 gebildet ist. Die sekundärseitige Sternwicklung 420 bildet drei sekundärseitige Transformatoranschlüsse S1, S2 und S3 des Streufeldtransformators 40 sowie einen Sternpunkt SP.

In der Figur 2 erkennt man darüber hinaus drei Modulreihenschaltungen 710, die das Multilevelumrichtermodul 70 bilden. Die Modulreihenschaltungen 710 sind jeweils zwischen einen der sekundärseitigen Transformatoranschlüsse S1, S2 oder S3 sowie den Sternpunkt SP, den die Sternwicklung 420 bildet, geschaltet.

Die Figur 3 zeigt ein Ausführungsbeispiel für eine Modulreihenschaltung 710, die zur Bildung des Multilevelumrichtermoduls 70 gemäß Figur 2 bzw. des Multilevelumrichtermoduls 70 gemäß Figur 1 geeignet ist.

Die Modulreihenschaltung 710 gemäß Figur 3 umfasst eine Vielzahl an Schaltmodulen 711, einen reihenschaltungseigenen Stromsensor 712 sowie einen Serienschwingkreis 713.

Der Stromsensor 712 misst den durch die Modulreihenschaltung 710 fließenden Strom und liefert einen entsprechenden Strommesswert vorzugsweise an die Steuereinrichtung 80 gemäß Figur 1.

Der Serienschwingkreis 713 wird durch eine Induktivität Ls sowie durch einen Kondensator Cs gebildet. Die Induktivität Ls umfasst vorzugsweise einen Eisenkern, besonders bevorzugt eine Spule, deren Spuleninneres mit einem Eisenkern ganz oder zum Teil gefüllt ist.

Der Serienschwingkreis 713 bzw. dessen Komponenten Ls und Cs sind vorzugsweise derart bemessen, dass der Serienschwingkreis 713 eine Schwingfrequenz aufweist, die dem Dreifachen der Netzfrequenz des Wechselspannungsnetzes 10 gemäß Figur 1 oder einem ganzzahligen Vielfachen dieser Netzfrequenz entspricht. Eine solche Schwingfrequenz ermöglicht Ausgleichsströme, die innerhalb des Multilevelumrichtermoduls 70 oder zumindest auf der Sekundärseite der Blindleistungskompensationseinrichtung 30 fließen, jedoch - wegen der Frequenzwahl - nicht oder zumindest nicht in signifikantem Umfange in das Wechselspannungsnetz 10 gelangen werden.

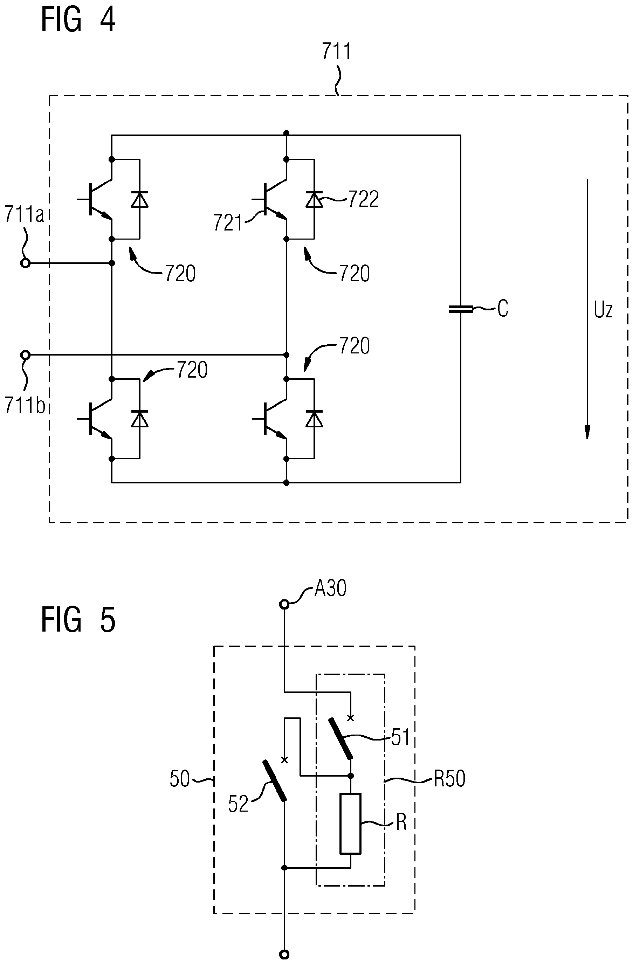

Die Figur 4 zeigt ein Ausführungsbeispiel für ein Schaltmodul 711, das zur Bildung der Modulreihenschaltung 710 gemäß Figur 3 bzw. zur Bildung der Modulreihenschaltung 710 gemäß Figur 2 geeignet ist. Bei dem Schaltmodul 711 handelt es sich um ein H-Brückenmodul, das vier zu einer H-Brückenschaltung verschaltete Schalter 720 umfasst. Die Schalter 720 werden vorzugsweise jeweils durch ein Halbleiterschaltelement 721, beispielsweise in Form eines Transistors (wie beispielsweise eines IGBT), sowie eine dazu parallel geschaltete Halbleiterdiode 722 gebildet. Parallel zur Reihenschaltung jeweils zweier Schalter 720 ist ein Kondensator C des Schaltmoduls 711 geschaltet, an dem eine Zwischenkreisspannung Uz des Schaltmoduls 711 abfällt.

Die äußeren Anschlüsse des Schaltmoduls 711 sind in den Figuren 3 und 4 jeweils mit den Bezugszeichen 711a und 711b gekennzeichnet, um die Verschaltung der Schaltmoduls 711 untereinander zu verdeutlichen.

Die Figur 5 zeigt ein Ausführungsbeispiel für eine Schalteinrichtung 50, die bei der Blindleistungskompensationseinrichtung 30 gemäß Figur 1 eingesetzt werden kann. Die Schalteinrichtung 50 umfasst eine Reihenschaltung R50, die durch einen ersten Schalter 51 sowie eine dazu in Reihe geschaltete Parallelschaltung aus einem ohmschen Widerstand R und einem zweiten Schalter 52 gebildet ist.

Der in der Figur 5 obere Anschluss der Schalteinrichtung 50 steht vorzugsweise mit dem äußeren Netzanschluss A30 der Blindleistungskompensationseinrichtung 30 gemäß Figur 1 in Verbindung. Der in der Figur 5 untere Anschluss der Schalteinrichtung 50 steht vorzugsweise mit dem Stromsensor 60 gemäß Figur 1 oder den primärseitigen Transformatoranschlüssen des Streufeldtransformators 40 in Verbindung.

Die Schalteinrichtung 50 gemäß Figur 5 ist - wie bereits im Zusammenhang mit der Figur 1 angesprochen - vorzugsweise dreiphasig ausgeführt. Aus Gründen der Übersicht ist in der Figur 5 lediglich einer der drei Phasenstränge der Schalteinrichtung 50 gezeigt. Die beiden anderen, in der Figur 5 nicht gezeigten Phasenstränge der Schalteinrichtung 50 können mit dem in der Figur 1 gezeigten Phasenstrang identisch sein.

Die Ansteuerung der Schalteinrichtung 50 erfolgt durch die Steuereinrichtung 80 gemäß Figur 1 vorzugsweise derart, dass diese für den abgeschalteten Zustand der Blindleistungskompensationseinrichtung 30 den ersten und den zweiten Schalter 51 und 52 in die jeweils geöffnete Schalterstellung bringt oder dort belässt.

Die Inbetriebnahme der Blindleistungskompensationseinrichtung 30 erfolgt vorzugsweise in zwei zeitlichen Ablaufschritten: In einem ersten Ablaufschritt bei der Inbetriebnahme der Blindleistungskompensationseinrichtung 30 schließt die Steuereinrichtung 80 zunächst den ersten Schalter 51 und lässt dabei den zweiten Schalter 52 geöffnet; in einem nachfolgenden zweiten Ablaufschritt bei der Inbetriebnahme der Blindleistungskompensationseinrichtung schließt sie zusätzlich den zweiten Schalter 52, wodurch der Widerstand R kurzgeschlossen und inaktiviert wird.

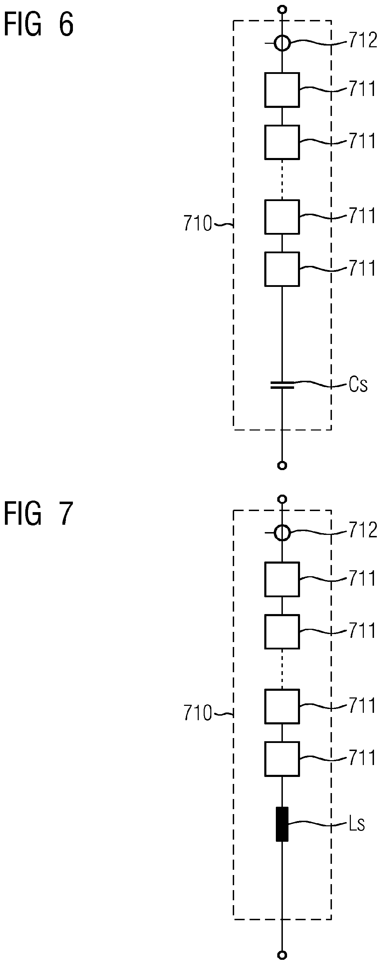

Die Figur 6 zeigt ein weiteres Ausführungsbeispiel für eine Modulreihenschaltung 710, die zur Bildung des Multilevelumrichtermoduls 70 gemäß Figur 2 bzw. zur Bildung der Blindleistungskompensationseinrichtung 30 gemäß Figur 1 geeignet ist. Die Modulreihenschaltung 710 gemäß Figur 6 weist eine Vielzahl an in Reihe geschalteten Schaltmodulen 711, einen dazu in Reihe liegenden reihenschaltungseigenen Stromsensor 712 sowie einen Kondensator Cs auf.

Die Funktion des Kondensators Cs besteht darin, mit der sekundärseitigen Induktivität der sekundärseitigen Sternwicklung 420 des Streufeldtransformators 40 (vgl. Figuren 1 und 2) einen Serienschwingkreis zu bilden, dessen Schwingfrequenz dem Dreifachen der Netzfrequenz des Wechselspannungsnetzes 10 gemäß Figur 1 bzw. einem ganzteiligen Vielfachen dieser Netzfrequenz entspricht. Eine solche Schwingfrequenz ermöglicht in vorteilhafter Weise Ausgleichsströme innerhalb des Multilevelumrichtermoduls 70 oder zumindest auf der Sekundärseite der Blindleistungskompensationseinrichtung 30, die nicht oder zumindest nicht in signifikantem Umfange in das Wechselspannungsnetz 10 gelangen können.

Die Figur 7 zeigt ein weiteres Ausführungsbeispiel für eine Modulreihenschaltung 710, die zur Bildung des Multilevelumrichtermoduls 70 gemäß Figur 2 bzw. zur Bildung der Blindleistungskompensationseinrichtung 30 gemäß Figur 1 geeignet ist. Die Modulreihenschaltung 710 gemäß Figur 7 weist eine Vielzahl von in Reihe geschalteten Schaltmodulen 711, einen damit in Reihe liegenden reihenschaltungseigenen Stromsensor 712 sowie eine Induktivität Ls auf. Die Induktivität Ls wird vorzugsweise durch eine Induktivität mit Eisenkern, besonders bevorzugt durch eine Spule mit Eisenkern, gebildet.

Die Induktivität Ls ist betragsmäßig derart gewählt, dass diese zusammen mit den Kondensatoren in den Schaltmodulen 711 der Modulreihenschaltung 710 einen Schwingkreis bildet, dessen Schwingfrequenz einem ganzteiligen Vielfachen der Netzfrequenz des Wechselspannungsnetzes 10 gemäß Figur 1 bzw. einem ganzteiligen Vielfachen dieser Netzfrequenz entspricht. Wie bereits erläutert, ermöglicht eine solche Schwingfrequenz Ausgleichsströme allein innerhalb des Multilevelumrichtermoduls 70 oder zumindest allein auf der Sekundärseite der Blindleistungskompensationseinrichtung 30.

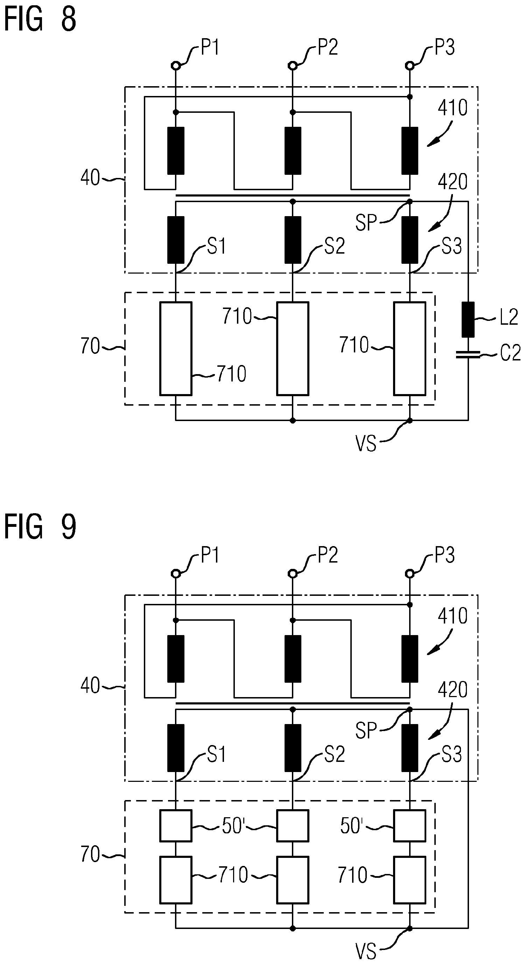

Die Figur 8 zeigt ein weiteres Ausführungsbeispiel für einen Streufeldtransformator 40 und ein Multilevelumrichtermodul 70, die zur Bildung der Blindleistungskompensationseinrichtung 30 gemäß Figur 1 herangezogen bzw. verwendet werden können. Die Anordnung aus Streufeldtransformator 40 und Multilevelumrichtermodul 70 gemäß Figur 8 entspricht der Anordnung aus Streufeldtransformator 40 und Multilevelumrichtermodul 70 gemäß Figur 2 mit dem einzigen Unterschied, dass zwischen dem sekundärseitigen Sternpunkt SP des Streufeldtransformators 40 und der elektrischen Verbindungsstelle VS zwischen den Modulreihenschaltungen 710 eine Induktivität L2 und ein Kondensator C2 geschaltet sind.

Die Induktivität L2 und der Kondensator C2 bilden einen Serienschwingkreis. Die Resonanzfrequenz des Serienschwingkreises beträgt vorzugsweise das Dreifache der Netzfrequenz des Wechselspannungsnetzes 10 gemäß Figur 1 oder ein ganzzahliges Vielfaches dieses Dreifachen.

Die Figur 9 zeigt ein weiteres Ausführungsbeispiel für einen Streufeldtransformator 40 und ein Multilevelumrichtermodul 70, die zur Bildung der Blindleistungskompensationseinrichtung 30 gemäß Figur 1 herangezogen bzw. verwendet werden können. Die Anordnung aus Streufeldtransformator 40 und Multilevelumrichtermodul 70 gemäß Figur 9 entspricht der Anordnung aus Streufeldtransformator 40 und Multilevelumrichtermodul 70 gemäß Figur 2 mit dem einzigen Unterschied, dass zwischen die sekundärseitigen Transformatoranschlüsse S1, S2 und S3 und die jeweils zugeordnete Modulreihenschaltung 710 jeweils eine Schalteinrichtung 50' geschaltet ist.

Die Schalteinrichtungen 50' können mit der Schalteinrichtung 50 gemäß Figur 5 identisch sein oder lediglich durch einen ohmschen Widerstand (wie den Widerstand R in Figur 5) und einen dazu parallel geschalteten Schalter (wie den Schalter 52 in Figur 5) gebildet sein.

Obwohl die Erfindung im Detail durch bevorzugte Ausführungsbeispiele näher illustriert und beschrieben wurde, so ist die Erfindung nicht durch die offenbarten Beispiele eingeschränkt

### Bezugszeichenliste

- 10: Wechselspannungsnetz
- 11: Anschlussschiene
- 13: Spannungssensor
- 14: Stromsensor
- 20: Last
- 30: Blindleistungskompensationseinrichtung
- 40: Streufeldtransformator
- 50: Schalteinrichtung
- 50': Schalteinrichtung
- 51: Schalter
- 52: Schalter
- 60: Stromsensor
- 70: Multilevelumrichtermodul
- 80: Steuereinrichtung
- 410: Dreieckswicklung
- 420: Sternwicklung
- 710: Modulreihenschaltungen
- 711: Schaltmodule
- 711a: Anschluss
- 711b: Anschluss
- 712: Stromsensor
- 713: Serienschwingkreis
- 720: Schalter
- 721: Halbleiterschaltelement
- 722: Halbleiterdiode

- A30: Netzanschlüsse
- C: Kondensator
- C2: Kondensator
- Cs: Kondensator
- G: Gruppe
- L2: Induktivität
- Ls: Induktivität
- Ib: Strom durch Blindleistungskompensationseinrichtung
- I: Laststrom
- P1: primärseitiger Transformatoranschluss
- P2: primärseitiger Transformatoranschluss
- P3: primärseitiger Transformatoranschluss
- R: Ohmscher Widerstand
- R50: Reihenschaltung
- S1: sekundärseitiger Transformatoranschluss
- S2: sekundärseitiger Transformatoranschluss
- S3: sekundärseitiger Transformatoranschluss
- SP: Sternpunkt
- ST: Steuersignal
- S80: Steuereingang
- Uz: Zwischenkreisspannung
- VS: Verbindungsstelle

## Patentansprüche

1. Blindleistungskompensationseinrichtung (30) für ein Wechselspannungsnetz (10) mit einem Transformator, der sekundärseitig in einer Sternpunktschaltung verschaltet ist und pro Phase einen sekundärseitigen Anschluss (S1-S3) aufweist, wobei zwischen jeden der sekundärseitigen Anschlüsse (S1-S3) des Transformators und dem Sternpunkt (SP) der Sternschaltung jeweils eine Modulreihenschaltung (710) mit mindestens zwei in Reihe geschalteten Schaltmodulen (711), die jeweils mindestens vier Schalter (720) und einen Kondensator (C) aufweisen, geschaltet ist, wobei der Transformator ein Streufeldtransformator (40) ist,
**dadurch gekennzeichnet, dass**
die Modulreihenschaltungen (710) zusätzlich zu den Schaltmodulen (711) jeweils einen mit den Schaltmodulen (711) in Reihe geschalteten Serienschwingkreis (713) aufweisen, dessen Resonanzfrequenz das Dreifache der Netzfrequenz oder ein ganzzahliges Vielfaches dieses Dreifachen beträgt.

2. Blindleistungskompensationseinrichtung (30) nach Anspruch 1,
**dadurch gekennzeichnet, dass**
die auf die Nennspannung bezogene Kurzschlussspannung des Streufeldtransformators (40) bei kurzgeschlossener Sekundärwicklung mindestens 20 % beträgt.

3. Blindleistungskompensationseinrichtung (30) nach einem der voranstehenden Ansprüche,
**dadurch gekennzeichnet, dass**
die durch die Streufelder des Streufeldtransformators (40) bedingten und an den sekundärseitigen Anschlüssen (S1-S3) wirkenden sekundärseitigen Streuinduktivitäten jeweils mit der an dem jeweiligen sekundärseitigen Anschluss (S1-S3) des Streufeldtransformators (40) angeschlossenen Modulreihenschaltung (710) in Reihe liegen.

4. Blindleistungskompensationseinrichtung (30) nach einem der voranstehenden Ansprüche,
**dadurch gekennzeichnet, dass**
die Modulreihenschaltungen (710) jeweils drosselfrei sind.

5. Blindleistungskompensationseinrichtung (30) nach einem der voranstehenden Ansprüche,
**dadurch gekennzeichnet, dass**
die Modulreihenschaltungen (710) jeweils luftdrosselfrei sind.

6. Blindleistungskompensationseinrichtung (30) nach einem der voranstehenden Ansprüche,
**dadurch gekennzeichnet, dass**
der Streufeldtransformator (40) sekundärseitig eine den Sternpunkt (SP) bildende Sternwicklung (420) und primärseitig eine Dreieckswicklung (420) aufweist, die die primärseitigen Transformatoranschlüsse (P1-P3) des Streufeldtransformators (40) bilden.

7. Blindleistungskompensationseinrichtung (30) nach einem der voranstehenden Ansprüche,
**dadurch gekennzeichnet, dass**
- die Blindleistungskompensationseinrichtung (30) eine Schalteinrichtung (50) aufweist, die jeweils zwischen die äußeren Netzanschlüsse (A30) der Blindleistungskompensationseinrichtung (30) und die primärseitigen Transformatoranschlüsse (P1-P3) des Streufeldtransformators (40) oder jeweils zwischen einen der sekundärseitigen Transformatoranschlüsse (S1, S2, S3) und die zugeordnete Modulreihenschaltung geschaltet ist, wobei
- die Schalteinrichtung (50) eine Reihenschaltung aufweist, die einen ersten Schalter (51) und eine Parallelschaltung aus einen ohmschen Widerstand (R) und einem zu diesem parallel geschalteten zweiten Schalter (52) umfasst.

8. Blindleistungskompensationseinrichtung (30) nach Anspruch 7,
**dadurch gekennzeichnet, dass**
die Blindleistungskompensationseinrichtung (30) eine Steuereinrichtung aufweist, die derart ausgestaltet ist, dass sie bei abgeschalteter Blindleistungskompensationseinrichtung (30) den ersten und den zweiten Schalter (51, 52) in der jeweils geöffneten Schalterstellung belässt, in einem ersten Ablaufschritt bei der Inbetriebnahme der Blindleistungskompensationseinrichtung (30) zunächst den ersten Schalter (51) schließt und dabei den zweiten Schalter (52) geöffnet lässt und in einem nachfolgenden zweiten Ablaufschritt bei der Inbetriebnahme der Blindleistungskompensationseinrichtung (30) zusätzlich den zweiten Schalter (52) schließt.

9. Blindleistungskompensationseinrichtung (30) nach einem der voranstehenden Ansprüche,
**dadurch gekennzeichnet, dass**
die Modulreihenschaltungen (710) zusätzlich zu den Schaltmodulen (711) jeweils eine mit den Schaltmodulen (711) in Reihe geschaltete Impedanz, insbesondere eine Induktivität (Ls) mit Eisenkern, und/oder einen Kondensator (Cs) aufweisen.

10. Blindleistungskompensationseinrichtung (30) nach einem der voranstehenden Ansprüche,
**dadurch gekennzeichnet, dass**
der Streufeldtransformator (40) und die Modulreihenschaltungen (710), insbesondere alle elektrischen Komponenten der Blindleistungskompensationseinrichtung (30), räumlich in einem nach außen hin abgeschlossenen Raum, insbesondere in demselben Gebäude oder in demselben Gehäuse, untergebracht sind.

11. Blindleistungskompensationseinrichtung (30) nach Anspruch 1,
**dadurch gekennzeichnet, dass**
die Serienschwingkreise (713) oder zumindest einer der Serienschwingkreise (713) eine Induktivität (Ls), insbesondere eine Induktivität mit Eisenkern, und einen damit in Reihe geschalteten Kondensator (Cs) umfasst oder durch diese Komponenten gebildet ist.

12. Blindleistungskompensationseinrichtung (30) nach einem der voranstehenden Ansprüche,
**dadurch gekennzeichnet, dass**
die Schaltmodule (711) H-Brückenmodule sind, die jeweils vier Halbleiterschaltelemente (721), zu denen jeweils eine Diode (722) parallel geschaltet ist, und einen Kondensator (C) aufweisen.

13. Blindleistungskompensationseinrichtung (30) nach einem der voranstehenden Ansprüche,
**dadurch gekennzeichnet, dass**
zwischen den sekundärseitigen Sternpunkt (SP) des Streufeldtransformators (40) und die elektrische Verbindungsstelle (VS) der Modulreihenschaltungen (710) eine Impedanz, insbesondere eine Induktivität (L2) mit Eisenkern, und/oder ein Kondensator (C2) geschaltet sind.

14. Verfahren zum Betreiben einer Blindleistungskompensationseinrichtung (30) für ein Wechselspannungsnetz, wobei
- mit einem Transformator, der sekundärseitig in einer Sternpunktschaltung verschaltet ist und pro Phase einen sekundärseitigen Anschluss (S1-S3) aufweist, sekundärseitige Phasenspannungen erzeugt werden und
- die sekundärseitigen Phasenspannungen jeweils an eine Modulreihenschaltung (710) mit mindestens zwei in Reihe geschalteten Schaltmodulen (711), die jeweils mindestens vier Schalter (720) und einen Kondensator (C) aufweisen, angelegt werden, wobei
- als Transformator ein Streufeldtransformator (40) verwendet wird und
- der Strom durch die Modulreihenschaltungen (710) im zeitlichen Verlauf durch die sekundärseitigen Streuinduktivitäten des Streufeldtransformators (40) geglättet und bei einem sekundärseitigen Kurzschluss begrenzt wird, **dadurch gekennzeichnet, dass**
zur Ermöglichung von Ausgleichströmen auf der Sekundärseite der Blindleistungskompensationseinrichtung ohne Rückwirkung auf die Primärseite zusätzlich zu den Schaltmodulen in den Modulreihenschaltungen jeweils in Reihe geschaltete Serienschwingkreise verwendet werden, deren Resonanzfrequenz das Dreifache der Netzfrequenz oder ein ganzzahliges Vielfaches dieser Dreifachen beträgt.

## Claims

1. Power factor correction device (30) for an AC grid system (10) having a transformer, the secondary side of which is connected up in a star point circuit and which has one secondary-side connection (S1-S3) per phase, wherein each of the secondary-side connections (S1-S3) of the transformer and the star point (SP) of the star circuit have a respective module series circuit (710) connected between them having at least two series-connected switching modules (711) that each have at least four switches (720) and a capacitor (C), wherein the transformer is a high-leakage-reactance transformer (40), **characterized in that** the module series circuits (710) each have, in addition to the switching modules (711), a series resonant circuit (713), connected in series with the switching modules (711), the resonant frequency of which is three times the system frequency or an integer multiple of these three times.

2. Power factor correction device (30) according to Claim 1,
**characterized in that**
the short-circuit voltage of the high-leakage-reactance transformer (40) referenced to the rated voltage is at least 20% when the secondary winding is shorted.

3. Power factor correction device (30) according to either of the preceding claims,
**characterized in that**
the secondary-side leakage inductances acting on the secondary-side connections (S1-S3), which leakage inductances are influenced by the leakage fields of the high-leakage-reactance transformer (40), are each in series with the module series circuit (710) connected to the respective secondary-side connection (S1-S3) of the high-leakage-reactance transformer (40).

4. Power factor correction device (30) according to one of the preceding claims,
**characterized in that**
the module series circuits (710) are each inductor-free.

5. Power factor correction device (30) according to one of the preceding claims,
**characterized in that**
the module series circuits (710) are each air-cored-inductor-free.

6. Power factor correction device (30) according to one of the preceding claims,
**characterized in that**
the high-leakage-reactance transformer (40) has, on the secondary side, a star winding (420) forming the star point (SP) and, on the primary side, a delta winding (420), which form the primary-side transformer connections (P1-P3) of the high-leakage-reactance transformer (40).

7. Power factor correction device (30) according to one of the preceding claims,
**characterized in that**
- the power factor correction device (30) has a switching device (50) that is connected between in each case the outer system connections (A30) of the power factor correction device (30) and the primary-side transformer connections (P1-P3) of the high-leakage-reactance transformer (40) or between in each case one of the secondary-side transformer connections (S1, S2, S3) and the associated module series circuit, wherein
- the switching device (50) has a series circuit that comprises a first switch (51) and a parallel circuit comprising a nonreactive resistor (R) and a second switch (52) connected in parallel therewith.

8. Power factor correction device (30) according to Claim 7,
**characterized in that**
the power factor correction device (30) has a control device that is configured such that it leaves the first and second switches (51, 52) in their respective open switch position when the power factor correction device (30) is switched off, first of all closes the first switch (51) and leaves the second switch (52) open in a first sequence step when the power factor correction device (30) is started up, and additionally closes the second switch (52) in a subsequent second sequence step when the power factor correction device (30) is started up.

9. Power factor correction device (30) according to one of the preceding claims,
**characterized in that**
the module series circuits (710) each have, in addition to the switching modules (711), an impedance connected in series with the switching modules (711), in particular an inductance (Ls) having an iron core, and/or a capacitor (Cs).

10. Power factor correction device (30) according to one of the preceding claims,
**characterized in that**
the high-leakage-reactance transformer (40) and the module series circuits (710), in particular all electrical components of the power factor correction device (30), are physically accommodated in a room sealed from the outside, in particular in the same building or in the same enclosure.

11. Power factor correction device (30) according to Claim 1,
**characterized in that**
the series resonant circuits (713) or at least one of the series resonant circuits (713) comprise(s) an inductance (Ls), in particular an inductance having an iron core, and a capacitor (Cs) connected in series therewith or is/are formed by these components.

12. Power factor correction device (30) according to one of the preceding claims,
**characterized in that**
the switching modules (711) are H-bridge modules that each have four semiconductor switching elements (721), each of which has a diode (722) connected in parallel with it, and a capacitor (C).

13. Power factor correction device (30) according to one of the preceding claims,
**characterized in that**
the secondary-side star point (SP) of the high-leakage-reactance transformer (40) and the electrical connecting point (VS) for the module series circuits (710) have an impedance, in particular an inductance (L2) having an iron core, and/or a capacitor (C2) connected between them.

14. Method for operating a power factor correction device (30) for an AC grid system, wherein
- a transformer, the secondary side of which is connected up in a star point circuit and which has one secondary-side connection (S1-S3) per phase, is used to generate secondary-side phase voltages, and
- the secondary-side phase voltages are each applied to a module series circuit (710) having at least two series-connected switching modules (711) that each have at least four switches (720) and a capacitor (C),
wherein
- the transformer used is a high-leakage-reactance transformer (40), and
- the current through the module series circuits (710) is smoothed over time by the secondary-side leakage inductances of the high-leakage-reactance transformer (40) and is limited in the event of a secondary-side short circuit, **characterized in that** to allow equalizing currents on the secondary side of the power factor correction device without reaction on the primary side, series-connected series resonant circuits, the resonant frequency of which is three times the system frequency or an integer multiple of these three times, are used in each of the module series circuits, in addition to the switching modules.

## Revendications

1. Dispositif (30) de compensation de puissance réactive d'un réseau (10) à tension alternative, comprenant un transformateur, qui, du côté secondaire, est monté suivant un montage à point neutre et qui a, par phase, une borne (S1 à S3) du côté secondaire, dans lequel, entre chacune des bornes (S1 à S3) du côté secondaire du transformateur et le point (SP) neutre du montage en étoile, est monté respectivement un montage (710) série de module, ayant au moins deux modules (711) de coupure montés en série, qui ont chacun au moins quatre interrupteurs (720) et un condensateur (C), le transformateur étant un transformateur (40) à dispersion,
**caractérisé en ce que**
les montages (710) en série de module ont, en plus des modules (711) de coupure, chacun un circuit (713) oscillant série, qui est monté en série avec les modules (711) de coupure et dont la fréquence de résonance est égale au triple de la fréquence du réseau ou a un multiple en nombre entier de ce triple.

2. Dispositif (30) de compensation de puissance réactive suivant la revendication 1,
**caractérisé en ce que**
la tension de court-circuit du transformateur (40) à dispersion, lorsque l'enroulement secondaire est court-circuité, représente au moins 20% de la tension nominale.

3. Dispositif (30) de compensation de puissance réactive suivant l'une des revendications précédentes,
**caractérisé en ce que**
les inductances de fuite, du côté secondaire, dues au champ dispersion du transformateur (40) à dispersion et agissant sur les bornes (S1 à S3) du côté secondaire, sont respectivement en série avec le montage (710) série de module connecté à la borne (S1 à S3) respective du côté secondaire du transformateur (40) à dispersion.

4. Dispositif (30) de compensation de puissance réactive suivant l'une des revendications précédentes,
**caractérisé en ce que**
les montages (710) série de module sont chacun sans bobine de self.

5. Dispositif (30) de compensation de puissance réactive suivant l'une des revendications précédentes,
**caractérisé en ce que**
les montages (710) série de module sont respectivement sans bobine de choc à air.

6. Dispositif (30) de compensation de puissance réactive suivant l'une des revendications précédentes,
**caractérisé en ce que**
le transformateur (40) à dispersion a, du côté secondaire, un enroulement (420) étoilé formant le point (SP) neutre et, du côté secondaire, un enroulement (420) en triangle, qui forme les bornes (P1 à P3) du côté primaire du transformateur (40) à dispersion.

7. Dispositif (30) de compensation de puissance réactive suivant l'une des revendications précédentes,
**caractérisé en ce que**
- le dispositif (30) de compensation de puissance réactive a un dispositif (50) de coupure, qui est monté respectivement entre les bornes (A30) extérieures de réseau du dispositif (30) de compensation de puissance réactive et les bornes (P1 à P3) du côté primaire du transformateur (40) à dispersion ou respectivement entre l'une des bornes (S1, S2, S3) du côté secondaire de transformateur et le montage série de module associé, dans lequel
- le dispositif (50) de coupure a un montage série, qui comprend un premier interrupteur (51) et un montage parallèle composé d'une résistance (R) ohmique et d'un deuxième interrupteur (52) monté en parallèle à celles-ci.

8. Dispositif (30) de compensation de puissance réactive suivant la revendication 7,
**caractérisé en ce que**
le dispositif (30) de compensation de puissance réactive a un dispositif de commande conformé de manière à ce qu'il laisse, lorsque le dispositif (30) de compensation de puissance réactive est déconnecté, le premier et le deuxième interrupteurs (51, 52) dans la position respectivement ouverte, dans un premier stade de déroulement, lors de la mise en service du dispositif (30) de compensation de puissance réactive, il ferme d'abord le premier interrupteur (51) et laisse ainsi ouvert le deuxième interrupteur (52) et, dans un deuxième stade de déroulement venant ensuite, lors de la mise en service du dispositif (30) de compensation de puissance réactive, il ferme supplémentairement le deuxième interrupteur (52).

9. Dispositif (30) de compensation de puissance réactive suivant l'une des revendications précédentes,
**caractérisé en ce que**
les montages (710) série de module ont supplémentairement, aux modules (711) de coupure, respectivement une impédance montée en série avec les modules (711) de coupure, notamment une inductance (Ls) à noyau de fer et/ou un condensateur (Cs).

10. Dispositif (30) de compensation de puissance réactive suivant l'une des revendications précédentes,
**caractérisé en ce que**
le transformateur (40) à dispersion et les circuits (710) série de module, notamment tous les composants électriques du dispositif (30) de compensation de puissance réactive, sont logés dans l'espace dans un espace fermé vis-à-vis de l'extérieur, notamment dans le même bâtiment ou dans la même enveloppe.

11. Dispositif (30) de compensation de puissance réactive suivant la revendication 1,
**caractérisé en ce que**
le circuit (713) oscillant série ou au moins l'un des circuits (713) oscillants série comprend une inductance (Ls), notamment une inductance à noyau de fer, et un condensateur (Cs) monté en série avec elle ou est formé de ces composants.

12. Dispositif (30) de compensation de puissance réactive suivant l'une des revendications précédentes,
**caractérisé en ce que**
les modules (711) de coupure sont des modules à pont en H, qui ont chacun quatre éléments (721) de commutation à semiconducteur, auxquels est montée respectivement en parallèle une diode (722), et un condensateur (C).

13. Dispositif (30) de compensation de puissance réactive suivant l'une des revendications précédentes,
**caractérisé en ce que**
entre le point (SP) neutre du côté secondaire du transformateur (40) à dispersion et le point (VS) de liaison électrique des montages (710) série de module, sont montés une impédance, notamment une inductance (L2) à noyau de fer, et/ou un condensateur (C2).

14. Procédé pour faire fonctionner un dispositif (30) de compensation de puissance réactive d'un réseau à tension alternative, dans lequel
- on produit des tensions de phase, du côté secondaire, par un transformateur, qui, du côté secondaire, est connecté suivant un montage à point neutre et a, par phase, une borne (S1à S3) du côté secondaire et
- on applique les tensions de phase du côté secondaire, respectivement à un montage (710) série de module, ayant au moins deux modules (711) de coupure montés en série et ayant chacun au moins quatre interrupteurs (720) et un condensateur (C),
dans lequel
- on utilise, comme transformateur, un transformateur (40) à dispersion et
- on lisse le courant dans les montages (710) série de module au cours du temps par les inductances de fuite du côté secondaire du transformateur (40) à dispersion et on le limite, s'il se produit un court-circuit du côté secondaire, **caractérisé en ce que**
- pour rendre possible des courants de compensation, du côté secondaire, du dispositif de compensation de puissance réactive, sans réaction sur le côté primaire, on utilise, en plus des modules de coupure, dans les montages série de module, respectivement des circuits oscillants série montés en série, dont la fréquence de résonance représente le triple de la fréquence du réseau ou un multiple en nombre entier de ce triple.
